# EUROPEAN PATENT APPLICATION

(11) **EP 1 975 476 A1**
(43) Date of publication of application: **01.10.2008**
(21) Application number: 08005070.1
(22) Date of filing: 18.03.2008
(51) Int. Cl.: F16J 3/04, F16D 3/84

(54) **Boot for constant-velocity universal joint and fixing structure for the same**

(30) Priority: 29.03.2007 JP 2007088841
(71) Applicant: TOYODA GOSEI CO., LTD., Nishikasugai-gun, Aichi-ken, 452-8564 (JP); JTEKT Corporation, Osaka-shi Osaka 542-8502 (JP)
(72) Inventor: Kumazaki, Hiroshi, Nagoya-shi Aichi-ken, 463-0063 (JP); Suzuki, Satoshi, Nishikasugai-gun, Aichi-ken, 452-8564 (JP); Takeuchi, Osamu, Osaka-shi, Osaka, 542-8502 (JP)
(74) Representative: Kramer - Barske - Schmidtchen

(57) **Abstract**

A boot for constant-velocity universal joint is retained to a shaft, which has a general surface, a tapered surface, or a vertical surface instead of the tapered surface, and a major-diameter surface that are disposed one after another in this order and coaxially. The boot includes a minor-diameter cylindrical portion (1), a major-diameter cylindrical portion (2), a tapered wall portion (4), or a vertical wall portion instead of the tapered wall portion, and a bellows (3). The minor-diameter cylindrical portion is retained to the major-diameter surface of the shaft. The major-diameter cylindrical portion is disposed separately away from the minor-diameter cylindrical portion and coaxially therewith. The tapered wall portion is in contact with the tapered surface of the shaft. The vertical wall portion is in contact with the vertical surface of the shaft. The bellows (3) connects the tapered wall portion (4) or the vertical wall portion with the major-diameter cylindrical portion (2) integrally.

## Description

The present invention is based on Japanese Patent Application No. 2007-88,841, filed on March 29, 2007, the entire contents of which are incorporated herein by reference.

### BACKGROUND OF THE INVENTION

### Field of the Invention

The present invention relates to a boot for constant-velocity universal joint, and a fixing structure for the same. More particularly, it relates to a boot for constant-velocity universal joint, and a fixing structure for the same, boot which covers constant-velocity universal joint, an indispensable component part for the joint of drive shaft for front-wheel-drive vehicle, to inhibit water and dust from coming in the joint element of constant-velocity universal joint.

### Description of the Related Art

Constant-velocity universal joints have been used for driving-power transmission systems for transmitting driving power from automotive engines to drive wheels, in particular, for drive shafts for front-wheel-drive vehicles. The constant-velocity universal joints have been provided with boots installed for sealing greases for lubricating the joint elements therein, and for inhibiting water and dust from coming in the joint elements.

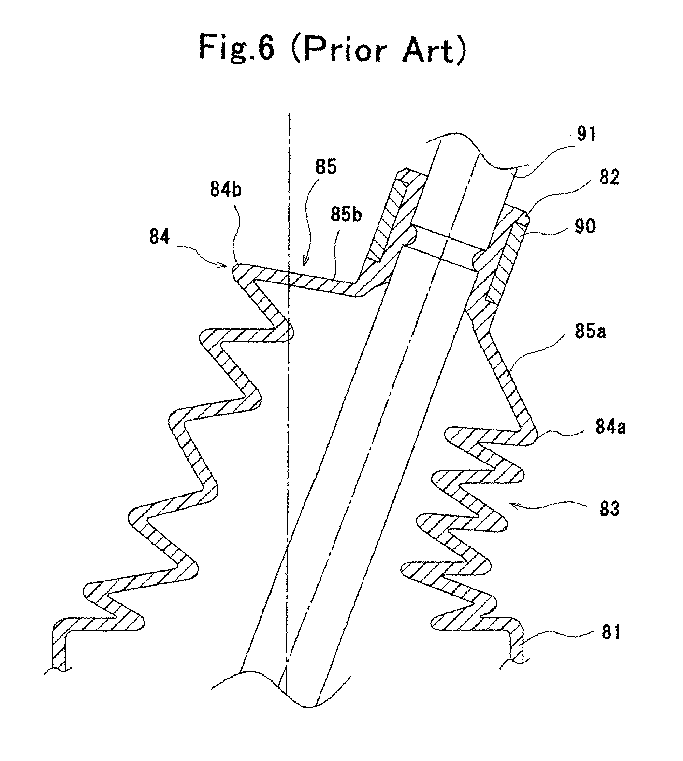

For example, Japanese Unexamined Patent Publication (KOKAI) Gazette No. 2001-3,950 discloses a conventional boot for such constant-velocity universal joints, one of known conventional boots therefor. As illustrated in Fig. 6, the conventional boot comprises a major-diameter cylindrical portion 81, a minor-diameter cylindrical portion 82, and a bellows 83. The major-diameter cylindrical portion 81 is fastened to a not-shown joint outer race. The minor-diameter cylindrical portion 82 has smaller inside and outside diameters than those of the major-diameter cylindrical portion 81, and is fastened to a shaft 91 by a fastener fitting 90, such as clamp or band. The bellows 83 connects the major-diameter cylindrical portion 81 with the minor-diameter cylindrical portion 82 integrally, and is formed as a truncated cone shape substantially.

When the conventional boot for constant-velocity universal joint is put in service, it rotates together with the joint outer race, to which the major-diameter cylindrical portion 81 is fastened, and together with the shaft 91, to which the minor-diameter cylindrical portion 82 is fastened. Then, as shown in Fig. 6, when the shaft 91 inclines nearer with respect to the joint outer race to change an angle that the joint outer race and the shaft 91 make (hereinafter referred to as "joint angle"), the bellows 83, which rotates together with the joint outer race and shaft 91, deforms in compliance with the changing joint angle, thereby sealing the joint element of constant-velocity universal joint.

However, when the constant-velocity universal joint rotates at a large joint angle, the conventional constant-velocity universal-joint boot, which has been deformed to bend or curve greatly, rotates together with the constant-velocity universal joint. Accordingly, a rising wall 85, a part of the conventional boot that extends from one of the opposite ends of the minor-diameter cylindrical portion 82, which neighbors on the bellows 83, toward the first crest 84 of the bellows 83, has been deformed greatly. Consequently, the conventional boot might have been associated with the following problems.

For example, when the shaft 91 inclines more with respect to the joint outer race, a curvature point upon curving or bending the conventional constant-velocity universal-joint boot deviates more from the center in the axial direction of the boot and comes nearer to the side of the major-diameter cylindrical portion 81, which is disposed closer to the joint element between the joint outer race and the shaft 91. Moreover, when the conventional boot is curved or bent, compression stress acts onto the conventional boot on a joint-angle narrowing-down side (i.e., the right-hand side of Fig. 6, that is, the shaft 91 inclines nearer with respect to the joint outer race); and tensile stress acts onto it on the opposite joint-angle widening-up side (i.e., the left-hand side of Fig. 6).

As a result, on the compression side in which the joint angle narrows down, the crests of the bellows 83, which are disposed nearer to the major-diameter cylindrical portion 81, are compressed so that the roots, which are disposed nearer to the maj or-diameter cylindrical portion 81, are pulled in diametrically inward. Therefore, in the bellows 83, which is disposednearer to theminor-diameter cylindrical portion 82, a compression-side section 84a of the first crest 84, which neighbors on the minor-diameter cylindrical portion 82, has come to fall down toward the major-diameter cylindrical portion 81, even though the compression-side section 84a is present on the compression side in which the joint angle narrows down.

On the other hand, on the tensile side in which the joint angle widens up, large tensile force acts onto the bellows 83, which is disposed nearer to the major-diameter cylindrical portion 81. However, since the facing compression-side section 84a falls down toward the major-diameter cylindrical portion 81 as described above, an opposite tensile-side section 84b of the first crest 84, which neighbors on the minor-diameter cylindrical portion 82, has come to fall down toward the minor-diameter cylindrical portion 82, even though the tensile-side section 84b is present on the tensile side in which the joint angle widens up.

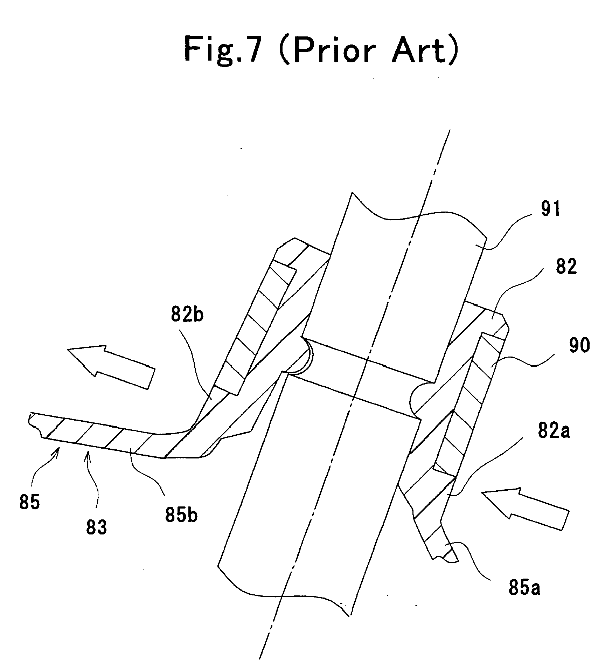

When the thus bent or curved conventional constant-velocity universal-joint boot rotates, the first crest 84 of the bellows 83, which neighbors on the minor-diameter cylindrical portion 82, is put in such a state that the compression-side section 84a falls down toward the major-diameter cylindrical portion 81, and in such a state that the tensile-side section 84b falls down toward the minor-diameter cylindrical portion 82, alternately and repetitively. Accordingly, the rising wall 85 has come to be put in such a state that it falls down to exhibit a diminishing rising angle when it coincides with a compression-side section 85a, and in such a state that it gets up to exhibit an enlarging rising angle when it coincides with a tensile-side section 85b, alternately and repetitively. Consequently, as illustrated in Fig. 7, the fastener fitting 90 has come to be put in such a state that it sinks downward at a compression-side section 82a, and in such a state that it floats upward at a tensile-side section 82b, alternately and repetitively, in one of the opposite ends of the minor-diameter cylindrical portion 82 that neighbors on the bellows 83.

Under the circumstances, the larger the joint angle, which the joint outer race and shaft 19 make, becomes, the greater the first crest 84 of the bellows 83, which neighbors on the minor-diameter cylindrical portion 82, inclines. Accordingly, the rising wall 85 of the bellows 83 deforms more greatly so that the fastener fitting 90 sinks downward and floats upward more greatly. Consequently, the one of the opposite ends of the minor-diameter cylindrical portion 82, which is disposed on the side of the bellows 83, is subjected to a pumping action that pulls in grease, which is held inside the conventional boot for constant-velocity universal joint, toward the minor-diameter cylindrical portion 82 and then discharges the grease to the outside of the conventional boot. As a result, there might be such a fear that grease leakage occurs.

In the meantime, Japanese Unexamined Utility Model Publication (KOKAI) Gazette No. 6-73,533 discloses a boot for constant-velocity universal joint, boot which is provided with a retaining cylindrical portion. The retaining cylindrical portion is formed by enlarging the axial length of the minor-diameter cylindrical portion, and is thereby disposed nearer to a part of the minor-diameter cylindrical portion, which adjoins the bellows, than the fastener fitting, which is placed adjacent to the opening end of the minor-diameter cylindrical portion, is disposed. In this conventional boot, it is believed that it might be possible to solve the aforementioned grease-leakage problem because the retaining cylindrical portion, which is disposed nearer to the bellows than the fastener fitting is disposed, exists in the minor-diameter cylindrical portion.

However, in order to securely inhibit the grease leakage from occurring in the conventional boot for constant-velocity universal joint that is disclosed in Japanese Unexamined Utility Model Publication (KOKAI) Gazette No. 6-73,533, it is needed so as not to let stress, which arises because of the deforming rising wall, act onto the fastener fitting by shutting off the stress from transmitting by means of the retaining cylindrical portion's rigidity. On the other hand, for the purpose of enlarging the retaining cylindrical portion' s rigidity, it is necessary to make the retaining cylindrical portion longer, or to make the retaining cylindrical portion thicker. However, the lengthened or thickened retaining cylindrical portion has resulted in the weight increment of the conventional boot, or in the degrading degree of freedom in designing and manufacturing the conventional boot.

### SUMMARY OF THE INVENTION

The present invention has been developed in view of the aforementioned circumstances. It is therefore an object of the present invention to provide a boot for constant-velocity universal joint, boot which is provided with a countermeasure for grease leakage while inhibiting the weight from increasing and keeping the degree of designing freedom from degrading, and a fixing structure for the same.

A boot for constant-velocity universal joint according to the present invention solves the aforementioned problems, the boot is retained to a shaft, the shaft having a general surface, a tapered surface, or a vertical surface instead of the tapered surface, and a major-diameter surface that are disposed one after another in this order and coaxially,
the general surface exhibiting an outside diameter, and having opposite ends,
the tapered surface exhibiting a minimum outside diameter being defined by the outside diameter of the general surface, and an outside diameter increasing from the minimum outside diameter to a maximum outside diameter gradually in an axial direction away from the general surface,
the vertical surface extending from one of the opposite ends of the general surface in a diametric direction outward and perpendicularly to the general surface, and exhibiting a maximum outside diameter,
the major-diameter surface exhibiting an outside diameter being defined by the maximum outside diameter of the tapered surface or that of the vertical surface, and
the boot comprises:
a minor-diameter cylindrical portion having opposite ends and inside and outside diameters, and being retained to the major-diameter surface of the shaft;
a major-diameter cylindrical portion having inside and outside diameters that are larger than the inside and outside diameters of the minor-diameter cylindrical portion, and being disposed separately away from the minor-diameter cylindrical portion and coaxially therewith;
a tapered wall portion, or a vertical wall portion instead of the tapered wall portion,
   the tapered wall portion adjoining one of the opposite ends of the minor-diameter cylindrical portion that faces the major-diameter cylindrical portion, and having inside and outside diameters decreasing from large to small gradually in a direction away from the one of the opposite ends to the major-diameter cylindrical portion, thereby being in contact with the tapered surface of the shaft,
   the vertical wall portion extending from the one of the opposite ends of the minor-diameter cylindrical portion that faces the major-diameter cylindrical portion in a diametric direction inward and perpendicularly to the minor-diameter cylindrical portion, thereby being in contact with the vertical surface of the shaft; and
a bellows connecting the tapered wall portion or the vertical wall portion with the major-diameter cylindrical portion integrally, and having an overall outer configuration being formed as a truncated cone shape substantially.

The present boot for constant-velocity universal joint comprises the tapered wall portion or the vertical wall portion, which is disposed between the minor-diameter cylindrical portion and the bellows. Accordingly, even when the bellow's rising wall deforms upon putting the present boot in service, the deforming rising wall brings the tapered wall portion or vertical wall portion into contact, close contact or pressure contact with the tapered surface or vertical surface of the shaft, and thereby the tapered wall portion or vertical wall portion can shut off stress, which occurs resulting from the deforming of the rising wall, from transmitting toward the minor-diameter cylindrical portion. Consequently, even when the present boot is curved or bent greatly and then rotates so that the rising wall of the bellows has deformed greatly, the tapered wall portion or vertical wall portion can keep stress, which arises from the deforming of the rising wall, from transmitting to the minor-diameter cylindrical portion. Therefore, the tapered wall portion or vertical wall portion can inhibit the one of the opposite ends of the minor-diameter cylindrical portion, which adjoins the bellows, from sinking downward and floating upward. All in all, the tapered wall portion or vertical wall portion can prevent grease leakage, which results from the above-described pumping action, from occurring.

Moreover, in the present boot for constant-velocity universal joint, the tapered wall portion or vertical wall portion contacts, close contacts or pressure contacts with the tapered surface or vertical surface of the shaft as described above, thereby shutting off stress, which results from the deforming of the rising wall, from transmitting toward the minor-diameter cylindrical portion. In other words, it is not the case at all that heightening the rigidity of the tapered wall portion or vertical wall portion essentially results in shutting off stress transmission. Accordingly, unlike the above-described second conventional boot for constant-velocity universal joint in which stress transmission is shut off by heightening the rigidity of the retaining cylindrical portion, it is not necessary to make the retaining cylindrical portion longer or to make it thicker. Consequently, the present boot hardly suffers from such problems that its weight has increased, and that the degree of freedom in designing and manufacturing has degraded.

Note herein that, when the presentbootfor constant-velocity universal joint comprises the tapered wall portion, the tapered wall portion and an imaginary central line of the present boot or that of the shaft make an angle "θ" that is less than 90 degrees. However, if the angle "θ" is too small, the tapered wall portion might be unable to shut off the stress transmission from the rising wall to the minor-diameter cylindrical portion effectively.

Therefore, in the present boot for constant-velocity universal joint, the tapered wall portion and an imaginary central line of the boot or that of the shaft make an angle "θ" that is 20 degrees or more, more preferably 40 degrees or more.

Moreover, the tapered wall portion can preferably exhibit the angle "θ" and a length "L" that are suitable for effectively inhibiting stress from transmitting from the rising wall to the minor-diameter cylindrical portion. Note herein that the length "L" of the tapered wall portion designates an inside oblique dimension that extends from one of the opposite ends of the minor-diameter cylindrical portion, which faces the bellows, to the rising wall's inside bottom end, which adjoins the taperedwall portion, obliquely.

Specifically, in the present boot for constant-velocity universal joint, the tapered wall portion and the imaginary central line of the boot or that of the shaft make an angle "θ" that falls in a range of from 20 to 70 degrees; the tapered wall portion has a length "L"; the general surface of the shaft has an outside diameter "D"; and a ratio of the length "L" to the outside diameter "D" falls in a range of from 1/4 to 1/2. Moreover, it is further preferable that the angle " θ," which the tapered wall portion and the imaginary central line of the present boot or that of the shaft make, can fall in a range of from 40 to 70 degrees, and that the ratio of the length "L" of the present boot' s tapered wall portion to the outside diameter "D" of the shaft's general surface can fall in a range of from 1/4 to 2/5. When the tapered wall portion exhibits such an angle "θ" and such a length "L," it can shut off stress, which the deforming of the rising wall produces, from transmitting to the minor-diameter cylindrical portion effectively even if the rising wall is deformed considerably to result in producing considerable stress. Note that the longer the tapered wall portion exhibits the length "L" the more effectively it can keep the stress from transmitting from the rising wall to the minor-diameter cylindrical portion. However, such a longer tapered wall portion has resulted in upsizing boot and shaft. Therefore, from the viewpoint of inhibiting the present boot and shaft from upsizing, it is feasible to determine the upper limit of the tapered wall portion's length "L."

Instead of the tapered wall portion, when the present boot for constant-velocity universal joint comprises the vertical wall portion, the vertical wall portion exhibits a length "L1" that is suitable for effectively shutting off stress from transmitting from the rising wall to the minor-diameter cylindrical portion. Note herein that the length "L1" of the vertical wall portion designates an inside vertical dimension that extends from one of the opposite ends of the minor-diameter cylindrical portion, which faces the bellows, to the rising wall's inside bottom end, which adjoins the vertical wall portion, vertically.

Specifically, in the present boot for constant-velocity universal joint, the vertical wall portion has a length "L1"; the general surface of the shaft has an outside diameter "D"; and a ratio of the length "L1" to the outside diameter "D" falls in a range of from 1/10 to 1/4. Moreover, it is further preferable that the ratio of the length "L1" of the present boot's vertical wall portion to the outside diameter "D" of the shaft's general surface can fall in a range of from 1/6 to 1/4. Even if the rising wall undergoes considerable deformation that produces considerable stress, it is possible for the vertical wall portion, which exhibits such a length "L1," to shut off the considerable stress from transmitting to the minor-diameter cylindrical portion effectively. Note that, when the vertical wall portion is longer, it is possible to inhibit the stress transmission from the rising wall to the minor-diameter cylindrical portion more effectively. However, when the vertical wall portion is made longer, boot and shaft have been upsized. Therefore, the upper limit of the vertical wall portion's length "L1" is determinable from the viewpoint of avoiding the upsized boot and shaft.

A fixing structure according to the present invention is for boot for constant-velocity universal joint, solves the aforementioned problems, and comprises: a shaft having a general surface, a tapered surface, or a vertical surface instead of the tapered surface, and a major-diameter surface that are disposed one after another in this order and coaxially,
the general surface exhibiting an outside diameter, and having opposite ends,
the tapered surface exhibiting a minimum outside diameter being defined by the outside diameter of the general surface, and an outside diameter increasing from the minimum outside diameter to a maximum outside diameter gradually in an axial direction away from the general surface,
the vertical surface extending from one of the opposite ends of the general surface in a diametric direction outward and perpendicularly to the general surface, and exhibiting a maximum outside diameter,
the major-diameter surface exhibiting an outside diameter being defined by the maximum outside diameter of the tapered surface or that of the vertical surface; and the present boot for constant-velocity universal joint, boot whose minor-diameter cylindrical portion is retained to the major-diameter surface of the shaft.

Therefore, the present boot for constant-velocity universal j oint and the present fixing structure for boot for constant-velocity universal joint can keep grease from leaking while not only inhibiting their weight from increasing but also prohibiting their degree of designing freedom from degrading.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.

Fig. 1 is a partial axial cross-sectional diagram for partially illustrating a boot for constant-velocity universal joint according to First Embodiment of the present invention that is fixed to a shaft and a mating member, and is a view taken by cutting the present boot according to First Embodiment with an imaginary plane involving its imaginary central line.

Fig. 2 is directed to the present boot according to First Embodiment, and is a partially-enlarged axial cross-sectional diagram for illustrating a major portion of Fig. 1 in a partially-enlarged cross-sectional view.

Fig. 3 is a cross-sectional diagram for illustrating the present boot according to First Embodiment in service.

Fig. 4 is a diagram for illustrating results of grease-leakage evaluation, which was carried out by means of finite element analysis (hereinafter abbreviated to as "FEA" wherever necessary), on the present boot according to First Embodiment and a boot for constant-velocity universal joint according to Comparative Example.

Fig. 5 is a partially-enlarged axial cross-sectional diagram for partially illustrating a major portion of a boot for constant-velocity universal joint according to Second Embodiment of the present invention that is fixed to a shaft and a mating member (not shown) in a partially-enlarged cross-sectional view.

Fig. 6 is a cross-sectional diagram for illustrating how a conventional boot for constant-velocity universal joint is used.

Fig. 7 is directed to the conventional boot, and is a partially-enlarged cross-sectional diagram for illustrating a major portion of the conventional boot and how pumping action occurs in it.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

### EXAMPLES

Hereinafter, specific examples of a boot for constant-velocity universal joint according to the present invention and a fixing structure for the same will be described in detail while referring to the drawings.

### (First Embodiment)

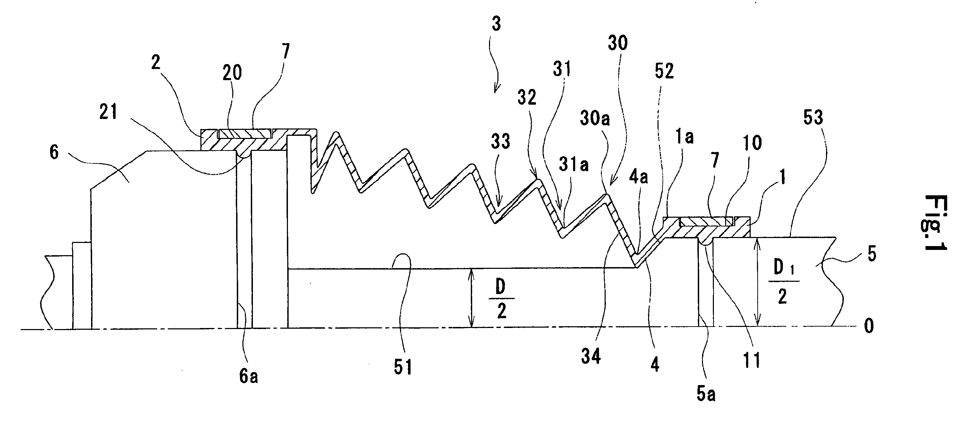

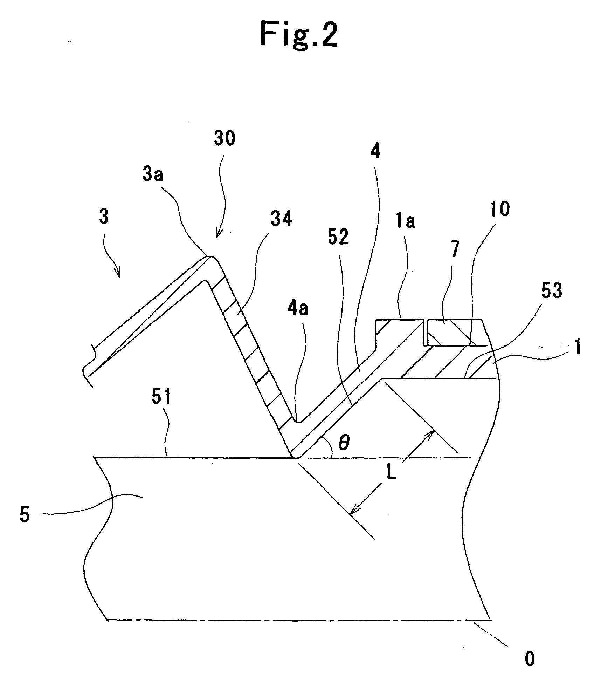

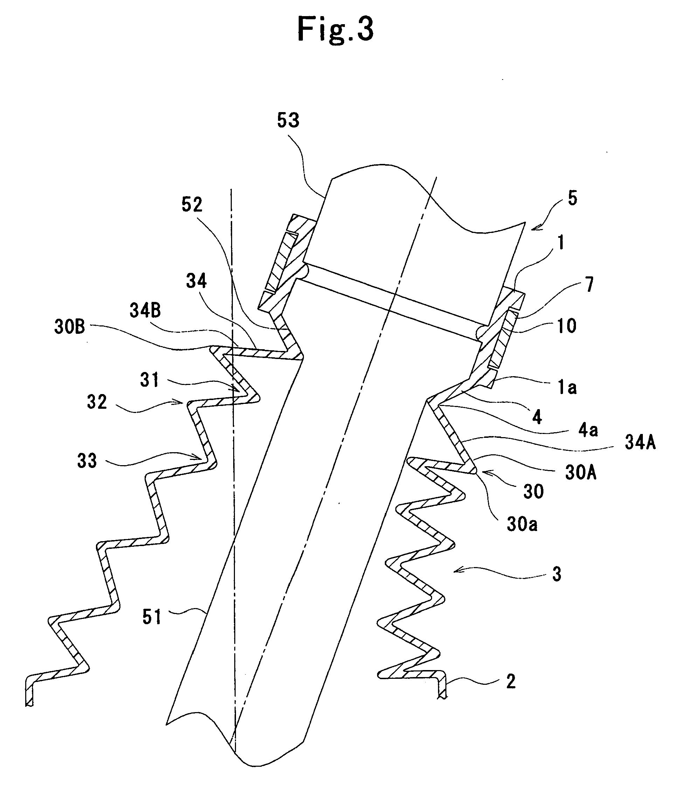

Fig. 1 illustrates a boot for constant-velocity universal joint according to First Embodiment of the present invention partially. The drawing shows how the present boot according to First Embodiment appears when it is fixed to a shaft and a joint outer race (i.e., a mating member). Moreover, the drawing is a partial vertical cross-sectional view that is taken by cutting the present boot according to First Embodiment with an imaginary plane involving its imaginary central line "O." Fig. 2 is a partially-enlarged cross-sectional diagram for illustrating a major part of Fig. 1 in a partially-enlarged cross-sectional view. Fig. 3 is a cross-sectional diagram for illustrating how the present boot according to First Embodiment appears in service.

As illustrated in Fig. 1, the present boot according to First Embodiment comprises a minor-diameter cylindrical portion 1, a major-diameter cylindrical portion 2, a bellows 3, and a tapered wallportion4. The major-diameter cylindrical portion 2 is disposed separately away from and coaxially with the minor-diameter cylindrical portion 1, and exhibits inside and outside diameters that are larger than those of the minor-diameter cylindrical portion 1. The tapered wall portion 4 adjoins to one of the opposite ends of the minor-diameter cylindrical portion 1, an opposite end 1a, that faces the major-diameter cylindrical portion 2. The bellows 3 connects the tapered wall portion 4 with the major-diameter cylindrical portion 2 integrally, and has an overall outer configuration that is formed as a truncated cone shape.

On the other hand, as shown in Fig. 1, a shaft 5, to which the minor-diameter cylindrical portion 1 of the present boot according to First Embodiment is retained, comprises a general surface 51, a tapered surface 52 and a major-diameter surface 53 that are disposed one after another in this order from the left to right in the drawing and coaxially to each other. The general surface 51 is connected to a joint outer race 6a of a constant-velocity universal joint's not-shown joint element at one of the opposite ends. Note that the major-diameter cylindrical portion 2 of the present boot according to First Embodiment is retained to the joint outer race 6a. The tapered surface 52 exhibits a minimum outside diameter, which is defined by the outside diameter "D" of the general surface 51, and an outside diameter, which increases from the minimum outside diameter to a maximum outside diameter gradually in an axial direction away from the other one of the opposite ends of the general surface 51, that is, one of the opposite ends of the general surface 51 that faces the joint outer race 6a backward, or from the left to right in the drawing. The major-diameter surface 53 exhibits an outside diameter "D1" that is defined by the maximum outside diameter of the tapered surface 52. Moreover, an outer peripheral surface of the major-diameter surface 53 of the shaft 5, and an outer peripheral surface of the joint outer race 6 are provided with an annular groove 5a, and an annular groove 6a, respectively. In addition, the outside diameter "D" of the general surface 51 was set at 20 mm, the outside diameter "D1" of the major-diameter surface 53 was set at 30 mm, and an angle "θ," which the tapered surface 52 and an imaginary central line "O" of the shaft 5 or that of the present boot according to First Embodiment make as explicitly shown in Fig. 2, was set at 45 degrees.

The present boot according to First Embodiment is formed of thermoplastic resin integrally. As for the thermoplastic resin, it is possible to use a simple thermoplastic elastomer, such as polyester elastomers, polyurethane elastomers, polyamide elastomers and polyolefin elastomers, or to use a blended elastomer comprising two or more of the specific elastomers. Moreover, in order to mold the present boot according to First Embodiment integrally, it is possible to employ one of the following known manufacturing processes : press blow molding, extrusion blow molding, injection blow molding, and injection molding, for instance.

Note that, in such a natural state that no external force acts onto the present boot according to First Embodiment, the minor-diameter cylindrical portion 1, the major-diameter cylindrical portion 2, the bellows 3, and the tapered wall portion 4 are placed concentrically to each other about the imaginary central line "O" of the present boot according to First Embodiment or that of the shaft 5.

As illustrated in Fig. 1, an outer peripheral surface of the minor-diameter cylindrical portion 1 is provided with an annular clamping groove 10. The annular clamping groove 10 engages with a fastener fitting 7, such as metallic band or clamp. Moreover, the inner peripheral surface of the minor-diameter cylindrical portion 1 is provided with an annular protrusion 11. The annular protrusion 11 engages with the annular groove 5a of the major-diameter surface 53 of the shaft 5, and has a cross section that is formed as an arc shape. Likewise, an outer peripheral surface of the major-diameter cylindrical portion 2 is provided with an annular clamping groove 20. The annular clamping groove 20 engages with another fastener fitting 7, such as metallic band or clamp. Moreover, the inner peripheral surface of the major-diameter cylindrical portion 2 is provided with an annular protrusion 21. The annular protrusion 21 engages with the annular groove 6a of the joint outer race 6, and has a cross section that is formed as an arc shape.

Note herein that the present boot according to First Embodiment comprises the tapered wall portion 4. The tapered wall portion 4 adjoins the opposite end 1a of the minor-diameter cylindrical portion 1 that faces the major-diameter cylindrical portion 2. The tapered wall portion 4 exhibits inside and outside diameters that decrease from large to small gradually in a direction away from the opposite end 1a of the minor-diameter cylindrical portion 1 to the major-diameter cylindrical portion 2, that is, from the right to left in Figs 1 and 2. Moreover, note that the tapered wall portion 4 and the imaginary central line "O" of the present boot according to First Embodiment or that of the shaft 5 made an angle "θ" shown in Fig. 2 that was set at 45 degrees. In addition, the tapered wall portion 4 had a length "L" shown in Fig. 2, an inside oblique linear dimension between its opposite ends, which was set at about 7 mm. Therefore, the ratio "L/D," that is, a ratio of the length "L" of the tapered wall portion 4 to the outside diameter "D" of the general surface 51 of the shaft 5, was controlled at about 7/20 (= 0.35 approximately).

Moreover, when the present boot according to First Embodiment is put under a fixed condition as well as in a natural state, that is, when the minor-diameter cylindrical portion 1 is fastened to and retained on the major-diameter surface 53 of the shaft 5; when the major-diameter cylindrical portion 2 is fastened to and retained on the joint outer race 6; and when no external force acts onto the present boot according to First Embodiment, the tapered wall portion 4 contacts with or contacts closely with (or adheres to) the tapered surface 52 of the shaft 5.

When the present boot according First Embodiment thus comprises such a tapered wall portion 4 that contacts with or contacts closely with (or adheres to) the tapered surface 52 of the shaft 5 in the initial stage of fixing, it is possible to control an axial position of the minor-diameter cylindrical portion 1 with respect to the major-diameter surface 53 of the shaft 5 by simply bringing the tapered wall portion 4 into contact with or close contact with (or by bringing it in adherence to) the tapered surface 52 of the shaft 5. The minor-diameter cylindrical portion 1 being thus positioned with respect to the major-diameter surface 53 makes the fastening operation of the fastener fitting 7 easier. Therefore, the present boot according to First Embodiment demonstrates upgraded readiness of assembling the minor-diameter cylindrical portion 1 with the major-diameter surface 53 of the shaft 5.

Note that it is not necessarily required that the tapered portion 4 contact with or contact closely with (or adheres to) the tapered surface 52 of the shaft 5 in the initial stage of fixing. In other words, it is allowable that the tapered portion 4 can contact with, contact closely with, or pressure contact with (or adheres to) the tapered surface 52 of the shaft 5 as the bellows 3 deforms upon putting the present boot according to First Embodiment in service.

Moreover, as illustrated in Fig. 1, the bellows 3 comprises a plurality of crests and roots, which are disposed alternately one after another. For example, the bellows 3 comprises a first crest 30, a first root 31, a second crest 32, a second root 33, and so on, that are disposed in this order from one of the opposite ends of the tapered wall portion 4, which neighbors on the bellows 3, or a constriction 4a especially (that is, the boundary between the tapered wall portion 4 and the bellows 3), to the major-diameter cylindrical portion 2. In addition, as shown in Figs. 1 and 2, the bellows 3 further comprises a rising wall 34, which makes a part of the first crest 30. Note that the rising wall 34 connects the constriction 4a with the top 30a of the first crest 30.

The present boot according to First Embodiment is put in service in the following manner: the minor-diameter cylindrical portion 1 is fitted around the major-diameter surface 53 of the shaft 5; and the major-diameter cylindrical portion 2 is fitted around the joint outer race 6, a mating member. Under the thus fixed condition, the minor-diameter cylindrical portion 1 is held in position, because not only it is fastened by the fastener fitting 7, such as a clamp, which is disposed within the clamping groove 10, but also its inner annular protrusion 11 engages with the annular groove 5a of the shaft 5. Moreover, the major-diameter cylindrical portion 2 is held in position, because not only it is fastened by the fastener fitting 7, such as a clamp, which is disposed within the clamping groove 20, but also its inner annular protrusion 21 engages with the annular groove 6a of the joint outer race 6.

Upon being put in service, the thus constructed present boot, or a fixing structure for the same, according to First Embodiment, operates as hereinafter described. As illustrated in Fig. 3, when the shaft 5 inclines nearer with respect to the joint outer race 6, the inclining shaft 5 curves or bends the present boot according to First Embodiment. Accordingly, the present boot according to First Embodiment is subjected to compression stress on the side of narrowing-down joint angle, that is, on the right-hand side of Fig. 3 in which the major-diameter surface 53 of the shaft 5 inclines nearer to the joint outer race 6. On the contrary, the present boot according to First Embodiment is subjected to tensile stress on the side of widening-up joint angle, that is, on the left-hand side of Fig. 3 in which the major-diameter surface 53 of the shaft 5 inclines more away from the joint outer race 6. Under the circumstances, the crests of the bellows 3, which are adjacent to the major-diameter cylindrical portion 2 and are located nearer to the curved or bent point of the bellows 3, are compressed to pull the roots diametrically inward on the compression side in which the joint angle narrows down. Accordingly, a compression-side section 30A of the first crest 30, that is, one of the crests of the bellows 3 that are located on the compression side in which the joint angle narrows down and are adjacent to the minor-diameter cylindrical portion 1, falls down toward the major-diameter cylindrical portion 2. Consequently, a compression-side section 34A of the rising wall 34 falls down in such a direction that the rising angle becomes smaller.

In the meanwhile, on the tensile or stretched side in which the joint angle widens up, a tensile-side section 34B of the rising wall 34, which is located oppositely to the compression-side section 34A, tries to get up in such a direction that the rising angle becomes greater, because the compression-side section 34A of the rising wall 34 falls down in such a direction that the rising angle becomes smaller on the opposite compression side. When the bellows 3 undergoes such a deformation that not only a tensile-side section 30B of the first crest 30 falls down toward the minor-diameter cylindrical portion 1 but also the tensile-side section 34B of the rising wall 34 gets up toward the minor-diameter cylindrical portion 1, diametrically inward stress arises in the tapered wall portion 4. As a result, the tapered wall portion 4, which has contacted with or contacted closely with (or adhered to) the tapered surface 52 of the shaft 5, is pressed onto the tapered surface 52 to pressure contact with the tapered surface 52.

Thus, the present boot, or a fixing structure for the same, according to First Embodiment can shut off the transmission of stress, which results from the deforming of the rising wall 34, effectively, even when the rising wall 34 of the bellows 3 deforms in service, because the tapered wall portion 4, which has contacted with or contacted closely with (or adhered to) the tapered surface 52 of the shaft 5, comes to pressure contact with the tapered surface 52 as the rising wall 34 deforms. Therefore, even when the greatly curved or bent present boot rotates to deform the rising wall 34 of the bellows 3 greatly, the tapered wall portion 4 can keep the stress that arises from the greatly deformed rising wall 34 from transmitting to the minor-diameter cylindrical portion 1. Hence, the tapered wall portion 4 inhibits the opposite end 1a of the minor-diameter cylindrical portion 1, which adjoins the bellows 3, from floating upward and sinking downward. All in all, the tapered wall portion 4 enables the present boot according to First Embodiment to prevent the grease leakage that results from the above-described pumping action.

Moreover, the present boot according to First Embodiment does not at all shut off the stress transmission by such a countermeasure, enhancing the rigidity of the tapered wall portion 4, itself. Accordingly, unlike the second conventional boot for constant-velocity universal joint which shuts off the stress transmission by enhancing the rigidity of the retaining cylindrical portion, it is not necessary to make the tapered wall portion 4 longer or to make it thicker. Consequently, the present boot according to First Embodiment is free of increasing weight, and little degrades the degree of freedom in designing and manufacturing boot for constant-velocity universal joint.

In addition, the present boot according to First Embodiment comprises the tapered wall portion 4 whose length "L" and angle "θ" are set at such a length and angle that are suitable for effectively shutting off the stress transmission from the rising wall 34 to the minor-diameter cylindrical portion 1. It is for this reason that the present boot according to First Embodiment can more effectively inhibit stress, which results from the deforming of the rising wall 34, from transmitting to the minor-diameter cylindrical portion 1.

Thus, it is apparent that the present boot according to First Embodiment and a fixing structure for the same can effectively prevent grease from leaking while not only inhibiting the weight from increasing and but also keeping the degree of designing freedom from degrading.

### (Evaluation for Grease Leakage by FEA)

The present boot according to First Embodiment was subjected to a simulation for evaluating how much hours it took when grease leakage occurred eventually. Note that the simulation was conducted by means of finite element analysis, one of the finite element methods, and was actually carried out under the following conditions:
Joint Angle, an angle that the joint outer race 6 and the shaft 5 made: 20 degrees;
Ambient Temperature: Room Temperature; and
Number of Revolutions: 600 rpm.

For comparison, a conventional boot for constant-velocity universal joint shown in Fig. 6 was prepared, and was likewise subjected to the simulation for the grease-leakage evaluation. Note that the conventional boot was formed as the same configuration as that of the present boot according to First Embodiment, and was manufactured from the same material as that made the present boot according to First Embodiment, except the following features. That is, the conventional boot comprised a rising wall 85, which extended from the opposite end of the minor-diameter cylindrical portion 82, adjoining the bellows 83, to the top of the first crest 84 of the bellows 83, and whose rising angle was 70 degrees. Moreover, it comprised a first bellows-making wall, which connected the top of the first crest 84 with the bottom of the first root neighboring on the first crest 84, and which exhibited an angle of 45 degrees. In addition, it was free from the claimed tapered wall portion.

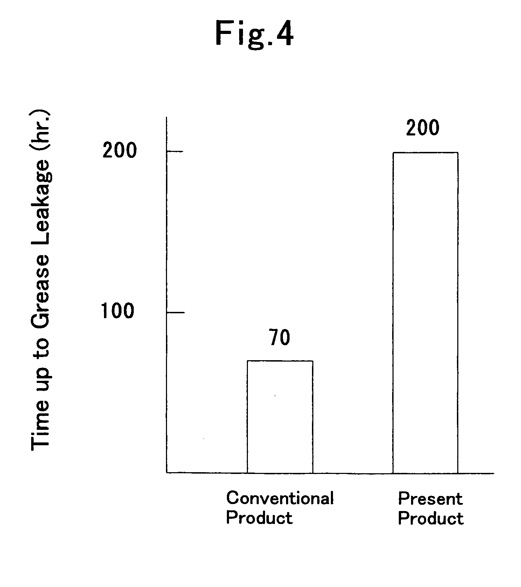

Fig. 4 illustrates the results of the grease-leakage evaluation on the present boot according to First Embodiment and on the conventional boot. As shown in Fig. 4, the conventional boot, the conventional product designated in the drawing, suffered from grease leakage that occurred 70 hours after starting the simulation. On the other hand, it took 200 hours after starting the simulation until grease leakage occurred in the present boot according to First Embodiment. Therefore, it was ascertained that the presence of the tapered wall portion 4, which was disposed between the minor-diameter cylindrical portion 1 and the bellows 3 and which contacted with, contacted closely with (or adhered to) or pressure contacted with the tapered surface 52 of the shaft 5, enabled the present boot according to First Embodiment to inhibit the grease leakage from arising.

### (Second Embodiment)

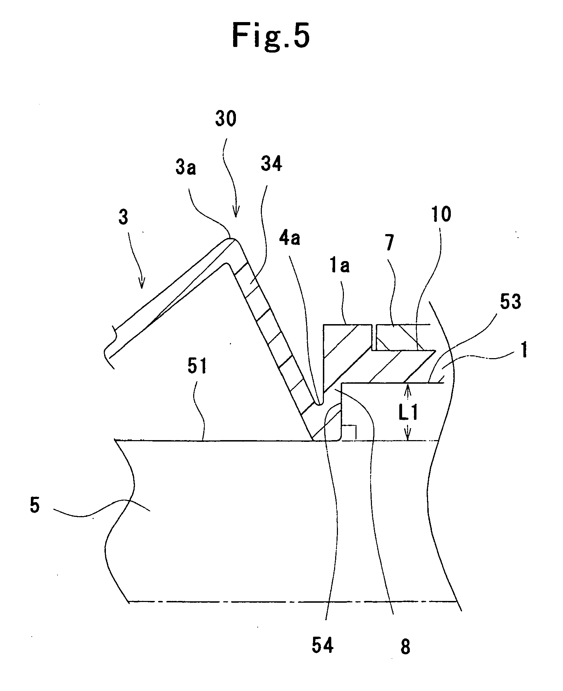

Fig. 5 is directed to a boot according to Second Embodiment of the present invention, or a fixing structure for the same, and illustrates its major part in an enlarged cross-sectional view. As shown in the drawing, it comprise a vertical surface 54 and a vertical wall portion 8 instead of the tapered surface 52 and tapered wall portion 4 that make the present boot according to First Embodiment, or a fixing structure for the same.

Specifically, in the present boot according to Second Embodiment, or in a fixing structure for the same, the shaft 5 comprises the general surface 51, a vertical surface 54, and the major-diameter surface 53 that are disposed one after another in this order from the left to right in Fig. 5. The vertical surface 54 extends from one of the opposite ends of the general surface 51, which faces the minor-diameter cylindrical portion 1, in a diametric direction outward and perpendicularly to the general surface 51, and exhibits a maximum outside diameter. The major-diameter surface 53 adjoins the diametrically outer end of the vertical surface 54, and exhibits an outside diameter that is defined by the maximum outside diameter of the vertical surface 54.

Moreover, the present boot according to Second Embodiment comprises the minor-diameter cylindrical portion 1, the major-diameter cylindrical portion 2, the bellows 3, and a vertical wall portion 8 . The vertical wall portion 8 extends from the opposite end 1a of the minor-diameter cylindrical portion 1, which faces the major-diameter cylindrical portion 2, and extends from the opposite end 1a in a diametric direction inward and perpendicularly to the minor-diameter cylindrical portion 1.

In addition, in the present boot according to Second Embodiment, or in a fixing structure for the same, the outside diameter "D" of the general surface 51 of the shaft 5 was set at 20 mm; the outside diameter "D1" of the major-diameter surface 53 of the shaft 5 was set at 28 mm; and the length "L1" of the vertical wall portion 8 was set at about 4 mm. Therefore, the ratio "L1/D," that is, the length "L1" of the vertical wall portion 8 to the outside diameter "D" of the general surface 51 of the shaft 5, was controlled at about 4/20, that is, 1/5, (= 0.2 approximately).

Except the vertical surface 54 of the shaft 5 and the vertical wall portion 8 of the present boot according to Second Embodiment, the present boot according to Second Embodiment, or a fixing structure for the same, comprises the same constituent elements as those of the present boot according to First Embodiment, or those of a fixing structure for the same.

Therefore, it is apparent from the above descriptions that the present boot according to Second Embodiment, or a fixing structure for the same, operates and effects advantages in the same manner as the present boot according to First Embodiment, or a fixing structure for the same, does.

Having now fully described the present invention, it will be apparent to one of ordinary skill in the art that many changes and modifications can be made thereto without departing from the spirit or scope of the present invention as set forth herein including the appended claims.
It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A boot for constant-velocity universal joint, the boot being retained to a shaft and comprising:
a minor-diameter cylindrical portion having opposite ends and inside and outside diameters;
a maj or-diameter cylindrical portion having inside and outside diameters that are larger than the inside and outside diameters of the minor-diameter cylindrical portion, and being disposed separately away from the minor-diameter cylindrical portion and coaxially therewith; and
a bellows having an overall outer configuration being formed as a truncated cone shape substantially;
the boot being **characterized in that**:
the shaft has a general surface, a tapered surface, or a vertical surface instead of the tapered surface, and a major-diameter surface that are disposed one after another in this order and coaxially,
the general surface exhibiting an outside diameter, and having opposite ends,
the tapered surface exhibiting a minimum outside diameter being defined by the outside diameter of the general surface, and an outside diameter increasing from the minimum outside diameter to a maximum outside diameter gradually in an axial direction away from the general surface,
the vertical surface extending from one of the opposite ends of the general surface in a diametric direction outward and perpendicularly to the general surface, and exhibiting a maximum outside diameter,
the major-diameter surface exhibiting an outside diameter being defined by the maximum outside diameter of the tapered surface or that of the vertical surface; and
the boot being further **characterized in that**:
the minor-diameter cylindrical portion is retained to the major-diameter surface of the shaft;
the boot further comprises:
a tapered wall portion, or a vertical wall portion instead of the tapered wall portion,
the tapered wall portion adjoining one of the opposite ends of the minor-diameter cylindrical portion that faces the major-diameter cylindrical portion, and having inside and outside diameters decreasing from large to small gradually in a direction away from the one of the opposite ends to the major-diameter cylindrical portion, thereby being in contact with the tapered surface of the shaft,
the vertical wall portion extending from the one of the opposite ends of the minor-diameter cylindrical portion that faces the major-diameter cylindrical portion in a diametric direction inward and perpendicularly to the minor-diameter cylindrical portion, thereby being in contact with the vertical surface of the shaft; and
the bellows connects the tapered wall portion or the vertical wall portion with the major-diameter cylindrical portion integrally.

2. The boot according to claim 1, wherein the tapered wall portion and an imaginary central line of the boot or that of the shaft make an angle "θ" that is 20 degrees or more.

3. The boot according to claim 2, wherein:
the tapered wall portion and the imaginary central line of the boot or that of the shaft make an angle "θ" that falls in a range of from 20 to 70 degrees;
the tapered wall portion has a length "L";
the general surface of the shaft has an outside diameter "D"; and
a ratio of the length "L" to the outside diameter "D" falls in a range of from 1/4 to 1/2.

4. The boot according to any one of the preceding claims, wherein:
the vertical wall portion has a length "L1";
the general surface of the shaft has an outside diameter "D"; and
a ratio of the length "L1" to the outside diameter "D" falls in a range of from 1/10 to 1/4.

5. A fixing structure for boot for constant-velocity universal joint, the fixing structure comprising:
a shaft; and
the boot according to either of claims 1 through 4;
the fixing structure being **characterized in that**:
the shaft has a general surface, a tapered surface, or a vertical surface instead of the tapered surface, and a major-diameter surface that are disposed one after another in this order and coaxially,
the general surface exhibiting an outside diameter, and having opposite ends,
the tapered surface exhibiting a minimum outside diameter being defined by the outs ide diameter of the general surface, and an outside diameter increasing from the minimum outside diameter to a maximum outside diameter gradually in an axial direction away from the general surface,
the vertical surface extending from one of the opposite ends of the general surface in a diametric direction outward and perpendicularly to the general surface, and exhibiting a maximum outside diameter,
the major-diameter surface exhibiting an outside diameter being defined by the maximum outside diameter of the tapered surface or that of the vertical surface; and
the fixing structure being further **characterized in that**:
the minor-diameter cylindrical portion of the boot is retained to the major-diameter surface of the shaft.
